# EUROPEAN PATENT SPECIFICATION

(11) **EP 2 042 023 B1**
(45) Date of publication and mention of the grant of the patent: **20.04.2011**
(21) Application number: 08165362.8
(22) Date of filing: 29.09.2008
(51) Int. Cl.: A01D 57/20

(54) **A mower with a conveyor belt**
Mäher mit Förderband
Tondeuse avec courroie de transport

(30) Priority: 28.09.2007 DK 200701401
(43) Date of publication of application: 01.04.2009
(73) Proprietor: JF-Fabriken - J. Freudendahl A/S, 6400 Sønderborg (DK)
(72) Inventor: Stamp, Brian, DK-6400, SØNDERBORG (DK); Freudendahl, Jørn, DK-6400, SØNDERBORG (DK)
(74) Representative: Joergensen, Bjoern Barker

(56) References cited:
- DE-C- 456 281
- DE-U1- 20 012 446
- FR-A- 1 420 072
- US-A- 1 724 300
- US-A- 6 164 051

## Description

The present invention relates to a mower comprising a mowing aggregate with a number of cutting aggregates and a conditioning device behind the row of cutting aggregates relative to a direction of advance during operation, and comprising belt conveyor means behind the mowing aggregate, comprising a conveyor belt running in a conveying direction over two rollers mounted in a conveyor frame, at least one roller being driven, and at least one roller being movably mounted in the conveyor frame for adjustment of the distance between the rollers.

There are various examples of mowers so provided with a conveyor belt for conveying mowed crop transversely to the running direction of the mower during work in order to collect crop material mowed over a large width into a relatively narrow swath.

One example is disclosed in EP-A-1 616 474, which describes a mower with two mowing aggregates with a very large working width.

It is known that running conveyor belts become worn and stretched during operation so that they become longer, and that two conveyor belts are usually not exactly the same length due to manufacturing tolerances, and therefore a replacement belt, when exchanged, is usually not of the same length as the original belt. It is therefore common that one of the two rollers (the turning rollers) over which a conveyor belt runs is mounted movably.

It is a continuous wish to provide mowers with a larger working width to make it possible to harvest a field faster with fewer passes.

If a conveyor belt is constructed to be very long, problems may arise in connection with adjustment of the distance between the turning rollers and the forces involved for the adjustment.

To avoid this problem, a mower according to the invention is so designed that the belt conveyor means comprise two co-operating, running conveyor belts mounted one after the other in their conveying direction, whereby each of the two conveyor belts, relative to each other, has a proximal roller and a distal roller, that the distal rollers of the conveyor belts are movably mounted in the respective conveyor frames, that the proximal rollers of the conveyor belts are mounted at a fixed mutual distance, and that the rollers of the two conveyor belts are mounted in a joint conveyor frame, or that the respective rollers of the two conveyor belts are mounted in respective conveyor frames fastened rigidly relative to each other with the proximal rollers at a fixed mutual distance. Dividing the conveyor belt into two parts in this way eliminates the disadvantages of one long belt. The two conveyor belts co-operate in the sense that one conveyor belt delivers conveyed material to the other conveyor belt for further conveying thereby.

As the distal rollers of the conveyor belts are movably mounted in the respective conveyor frames, the distal rollers can be moved to adjust the tension of the conveyor belts without thereby affecting the distance between the two conveyor belts or their proximal rollers, and without thereby affecting the ability of one conveyor belt to deliver material to the other conveyor belt.

In one embodiment, the rollers of the two conveyor belts are mounted in a joint conveyor frame. This makes it possible to obtain a simple construction of the conveyor means.

Alternatively, the respective rollers of the two conveyor belts may be mounted in respective conveyor frames, wherein the two conveyor frames are rigidly fastened relative to each other with the proximal rollers at a fixed mutual distance, at least in a working position. This makes it possible to obtain a certain flexibility of the conveyor means.

DE-U-299 19 023 describes a mower with a conditioning device and a belt conveyor for conveying mowed crop transversely to the running direction of the mower during work. The belt conveyor has an extension in the form of a short conveyor belt swingably fastened to the belt conveyor in order to be able to control where crop is placed on the field relative to the path of the mower. As opposed to the present invention, only one conveyor belt receives mowed crop directly from the conditioning device.

CA-A-1 215 846 describes a header for a harvester with a number of cutting aggregates and belt conveyor means directly behind the cutting aggregates. The belt conveyor means comprise two belt conveyors which can be individually displaced transversely to the running direction of the harvester and can turn their respective conveying directions in order to place mowed crop optionally to one side, to the other side, or centrally.

EP-A-1 849 349 constitutes prior art under Article 54(3) EPC and describes a harvester with a header comprising a number of cutting aggregates and belt conveyor means directly behind the cutting aggregates.

According to the present invention, the movable rollers may be releasably fastenable. Accordingly, the conveyor belt, when loaded, is substantially deflected by its own elastic extension only.

The proximal rollers of the two conveyor belts are preferably driven. This makes it possible to adjust the distance between the rollers of a conveyor belt by moving the distal roller without thereby involving the driven roller and the pertaining drive.

The two driven rollers may be driven by respective motors. Alternatively, the two driven rollers may be driven by a joint motor through a transmission. The latter is particularly practical when the proximal rollers are permanently fastened at a fixed mutual distance.

The invention will now be described in more detail below by means of an example of an embodiment and with reference to the schematic drawing, in which
Fig. 1 is a top view of an embodiment of a mower according to the invention in a working position,
Fig. 2 is a view corresponding to that of Fig. 1, in which the mower is in an intermediate position,
Fig. 3 is a view corresponding to that of Fig. 1, in which the mower is in a transport position,
Fig. 4 is a side view of the mower according to Fig. 1 in the transport position shown in Fig. 3,
Fig. 5 is a view seen from the end of a mowing aggregate with a lateral conveyor of the mower according to Fig. 1 in a working position corresponding to the working position of the mower of Fig. 1,
Fig. 6 is a view corresponding to that of Fig. 5, in which the lateral conveyor is in a transport position corresponding to the intermediate position and the transport position of the mower as shown in Figs. 2 and 3, respectively,
Fig. 7 shows a conveyor aggregate of the lateral conveyor, and
Fig. 8 is a schematic side view showing the frame structure of the conveyor aggregate.

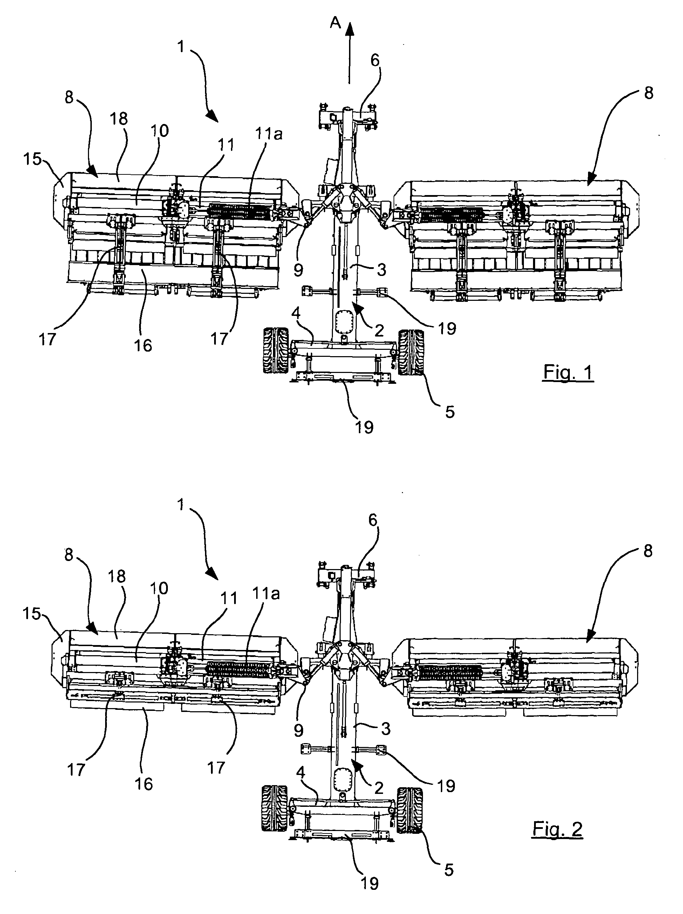

A mower 1 according to the invention and shown in Figs. 1 to 4 has a tractor frame in the form of a T-shaped running frame 2 with a leg 3 and a crossbeam 4 in the T. At the ends of the crossbeam 4 ground wheels 5 are provided, said wheels carrying the mower 1 at least partially. At the front end of the leg 3 a connection device 6 is provided for connecting the mower 1 with a tractor (not shown) for towing and possibly also for partially carrying the mower 1.

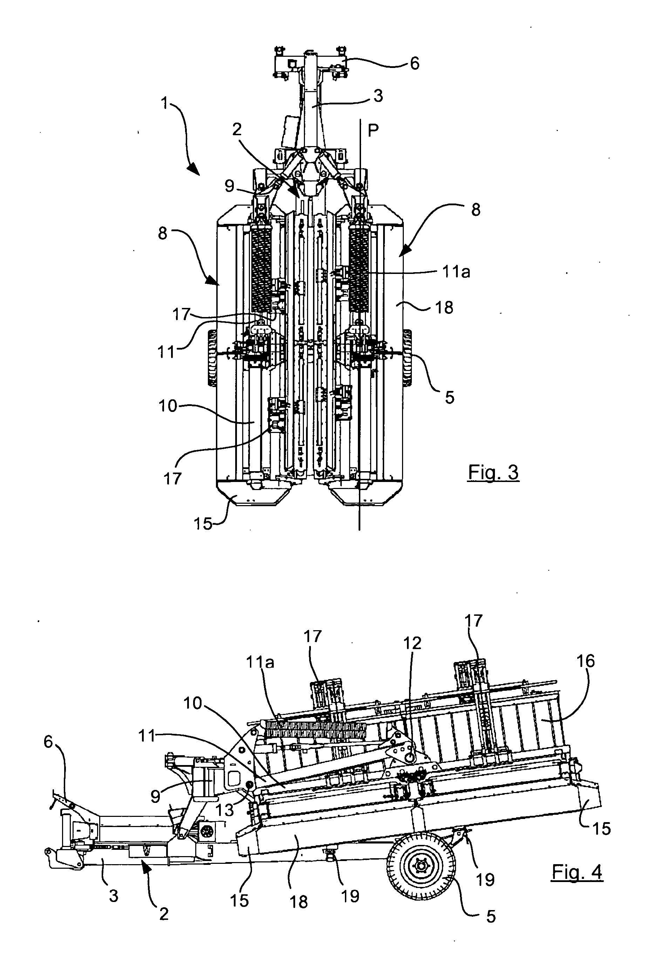

The mower 1 comprises two mowing aggregates 8, of which only the left one is shown in Fig. 4, while both are shown in Figs. 1 to 3. The mowing aggregates 8 are mounted on the running frame 2 substantially symmetrically about a vertical plane through the leg 3. Thus, each mowing aggregate 8 is mounted by a first hinge 9 with a substantially vertical axis about which the mowing aggregate 8 can swing in a horizontal plane between a working position (Fig. 1) or an intermediate position (Fig. 2) and a transport position (Figs. 3 and 4). In the working position and the intermediate position of the mower 1, each of the mowing aggregates 8 extends laterally from the running frame 2, and in the transport position each of the mowing aggregates 8 extends rearwards, as will be explained in detail below.

Each of the mowing aggregates 8 has a front and a rear relative to the running direction (arrow A) in the working position and comprises a frame structure 10 extending over the working width of the mowing aggregate 8. A beam 11 extends between a second hinge 12, which connects the beam 11 with the frame structure 10, and a third hinge 13 placed close to the first hinge 9, se Fig. 4 in particular. The second hinge 12 and the third hinge 13 each has a substantially horizontal hinge axis extending transversely to the beam 11. By swinging about the third hinge 13, the beam 11 can lift the mowing aggregate 8 from the ground. A power means, not shown, is provided, such as a hydraulic cylinder, to swing the beam 11 and lift the mowing aggregate 8. Furthermore, a spring 11a is provided to act on the beam 11 in order to relieve the pressure of the mowing aggregate 8 against the ground to a desired pressure. By swinging about the second hinge 12, the mowing aggregate 8 may adjust itself to the contour of the ground where it is uneven, in a manner known per se.

In addition to what has already been mentioned, the mowing aggregate 8 comprises cutting aggregates, not shown, in the form of a number of cutter discs mounted on a cutter bar extending in the working width transversely to the running direction A (Fig. 1). Under the cutter bar, slide shoes 14 are provided which slide across the ground during operation and carry the part of the weight of the mowing aggregate not carried by the running frame 2. A conditioning rotor, not shown, is provided behind the mowing means. The rotor may be of the type which, at its ends, has screw portions which can convey material cut by the mowing means towards the centre portion of the conditioning rotor where crimping fingers are provided which crimp or condition the material and throw it to the rear.

In a manner known per se, the mowing aggregates comprise a safety screen with side portions 15 and a safety cloth 18.

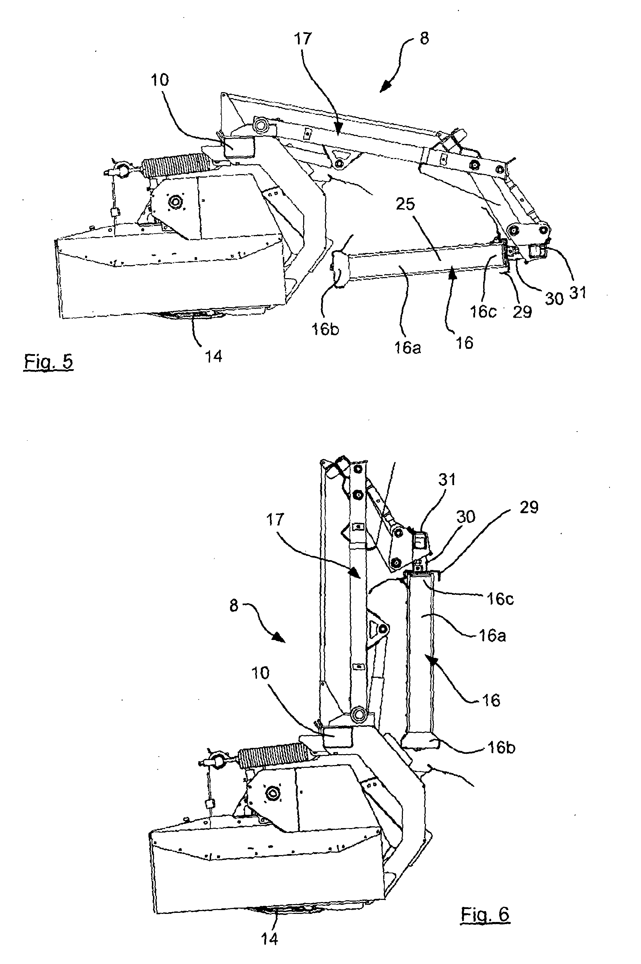

The mowing aggregate 8 is shown in further detail in Figs. 5 and 6 and is provided with a lateral conveyor 16 arranged behind the mowing aggregate 8 and hinged to the frame structure 10 by means of two carrier arms 17. Thereby, the lateral conveyor 16 may be swung between the working position shown in Figs. 1 and 5 and the transport position shown in Figs. 2 to 4 and 6. In Fig. 2, the mowing aggregate 8 with lateral conveyor is shown in an intermediate position in which the lateral conveyor 16 is in a transport position, but in which the actual mowing aggregate 8 has been swung out into a working position. In Figs. 3 and 4, the mowing aggregate 8 has been swung in so that it projects rearwards relative to the running direction and assumes its transport position resting on two abutments 19 on the running frame 2.

In its active working position, the lateral conveyor 16 may receive material thrown by the conditioning rotor and convey it laterally towards the centre line of the mower 1 (the leg 3). The lateral conveyor 16 comprises a conveyor aggregate 16a, which has a conveyor belt, and which has a front edge 16b and a rear edge 16c.

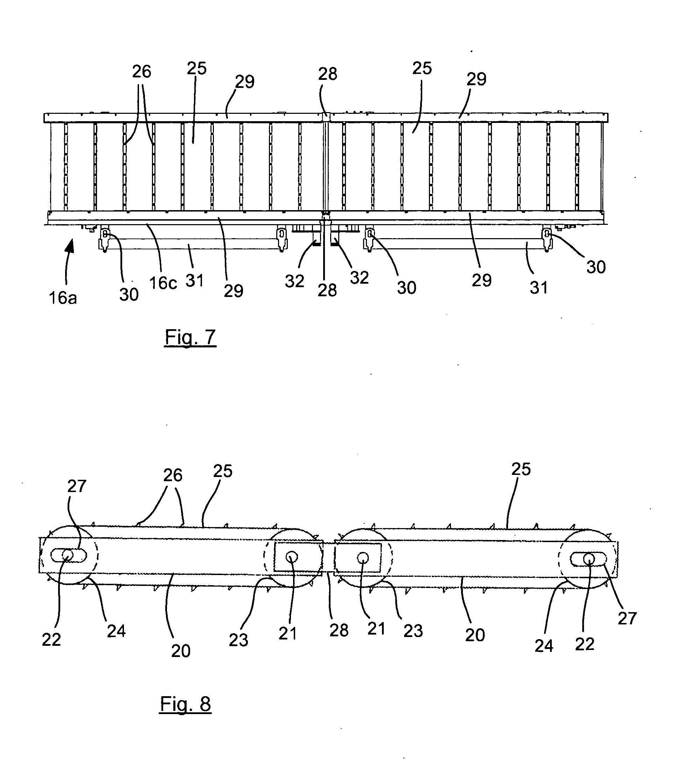

The conveyor aggregate 16a is illustrated in further detail in Figs. 7 and 8 and comprises two linked, uniformly built, but mutually mirrored belt conveyors together constituting the belt conveyor means of the mower. Each of the two belt conveyors comprises a conveyor frame with frame side portions 20 receiving shaft ends 21, 22 of a proximal roller 23 and a distal roller 24, respectively. A belt 25 provided with transverse carriers 26 for material to be conveyed runs around the two rollers 23, 24. The two rollers thus constitute turning rollers for the belt. The position of the proximal rollers 23 relative to the frame side portions 20 is fixed, whereas the shaft ends 22 of the distal rollers 24 are received in longitudinal holes 27 so that the position of the distal rollers 24 and thereby their distance from the proximal rollers 23 can be adjusted to tension the belts 25.

It should be understood that Fig. 8 shows the belt conveyors from one side, and that there are corresponding frame side portions not shown in Fig. 8 on their opposite other side.

As shown in Fig. 8, the two belt conveyors are mutually connected by fishplates 28, only the closest one of which is shown in Fig. 8, and which keep the shaft ends 21 and thereby the proximal rollers 23 at a fixed mutual distance. The fishplates 28 may be rigidly connected to the frame side portions 20 so that the latter cannot be moved relative to each other, or a limited turning of the fishplates about the shaft ends 21 relative to the frame side portions may be possible. As an alternative to rigidly connected fishplates, the respective frame side portions of the two belt conveyors may be formed integrally.

Fig. 7 shows a view of the two belt conveyors from the top downwards (direction VII in Fig. 8). The frame side portions and the rollers are not visible in Fig. 7 as they are hidden by side screens 29 and belts 25. The side screens 29 are provided to prevent material being conveyed from penetrating between the belt and the rollers.

As shown in Fig. 7, each of the two belt conveyors, at its rear edge 16c, has carrier brackets 30 fastened to one frame side portion. A carrier beam 31 for fastening carrier arms 17 extends between the respective carrier brackets 30. One of the carrier brackets 30 and one of the carrier beams 31 are also seen in Figs. 5 and 6. As appears from the drawing, the carrier arms 17 are movable as described in further detail in a concurrent patent application by the same applicant.

As further appears from Fig. 7, the two belt conveyors are provided with respective motors 32 each driving a respective one of the proximal rollers 23. The motors 32 may, for example, be electric or hydraulic and are supplied with power from a source, not shown.

As particularly appears from Fig. 8, the two belt conveyors are located in a common plane. As further appears from Figs. 7 and 8, the two belt conveyors are substantially of the same length.

The two belt conveyors act as one long belt conveyor, together being able to convey material transversely to the entire working width of the mowing aggregate. However, the problems that may arise in connection with a long conveyor belt, for example in connection with tightening of a long conveyor belt, are avoided.

## Claims

1. A mower comprising a mowing aggregate (8) with a number of cutting aggregates and a conditioning device behind the row of cutting aggregates relative to a direction of advance during operation, and comprising belt conveyor means (16) behind the mowing aggregate (8), comprising a conveyor belt (25) running in a conveying direction over two rollers (23, 24) mounted in a conveyor frame (20), at least one roller (23) being driven, and at least one roller (24) being movably mounted in the conveyor frame (20) for adjustment of the distance between the rollers, **characterized in that** the belt conveyor means (16) comprise two running conveyor belts (25) mounted one after the other in their conveying direction, whereby each of the two conveyor belts (25), relative to each other, has a proximal roller (23) and a distal roller (24), that the distal rollers (24) of the conveyor belts (25) are movably mounted in the respective conveyor frames (20) for adjustment of the tension of the conveyor belts, that the proximal rollers (23) of the conveyor belts are mounted at a fixed mutual distance, and that the rollers of the two conveyor belts are mounted in a joint conveyor frame, or that the respective rollers (23, 24) of the two conveyor belts are mounted in respective conveyor frames (20) fastened rigidly relative to each other with the proximal rollers (23) at a fixed mutual distance.

2. A mower according to claim 1, **characterized in that** the movable rollers (24) are releasably fastenable.

3. A mower according to claim 1 or 2, **characterized in that** the proximal rollers (23) of the two conveyor belts are driven.

4. A mower according to claim 3, **characterized in that** the two driven rollers (23) are driven by respective motors (32).

5. A mower according to claim 3, **characterized in that** the two driven rollers are driven by a joint motor through a transmission.

6. A mower according to any one of claims 1 to 5, **characterized in that** the two conveyor belts are located in a common plane in order to act as one long belt conveyor.

## Patentansprüche

1. Mäher mit einem Mähaggregat (8) mit einer Anzahl von Schneidaggregaten und einer Konditioniervorrichtung hinter der Reihe von Schneidaggregaten in Relation zu einer Vorwärtsbewegungsrichtung während des Betriebs, und mit einer Bandfördereinrichtung (16) hinter dem Mähaggregat (8), mit einem Förderband (25), das in einer Förderrichtung über zwei Rollen (23, 24) läuft, die in einem Fördereinrichtungsrahmen (20) angebracht sind, wobei mindestens eine Rolle (23) angetrieben ist und mindestens eine Rolle (24) in dem Fördereinrichtungsrahmen (20) beweglich angebracht ist, um die Distanz zwischen den Rollen einzustellen,
**dadurch gekennzeichnet, dass** die Bandfördereinrichtung (16) zwei laufende Förderbänder (25) aufweist, die in ihrer Förderrichtung hintereinander angebracht sind, so dass die beiden Förderbänder (25) relativ zueinander jeweils eine proximale Rolle (23) und eine distale Rolle (24) aufweisen, dass die distalen Rollen (24) der Förderbänder (25) in den jeweiligen Fördereinrichtungsrahmen (20) beweglich angebracht sind, um die Spannung der Förderbänder einzustellen, dass die proximalen Rollen (23) der Förderbänder in einer festen gegenseitigen Distanz angebracht sind, und dass die Rollen der beiden Förderbänder in einem gemeinsamen Fördereinrichtungsrahmen angebracht sind oder dass die jeweiligen Rollen (23, 24) der beiden Förderbänder in jeweiligen Fördereinrichtungsrahmen (20) angebracht sind, die relativ zueinander starr angebracht sind und die proximalen Rollen (23) in einer festen gegenseitigen Distanz aufweisen.

2. Mäher nach Anspruch 1,
**dadurch gekennzeichnet, dass** die beweglichen Rollen (24) lösbar befestigt werden können.

3. Mäher nach Anspruch 1 oder 2,
**dadurch gekennzeichnet, dass** die proximalen Rollen (23) der beiden Förderbänder angetrieben sind.

4. Mäher nach Anspruch 3,
**dadurch gekennzeichnet, dass** die beiden angetriebenen Rollen (23) von einem jeweiligen Motor (32) angetrieben werden.

5. Mäher nach Anspruch 3,
**dadurch gekennzeichnet, dass** die beiden angetriebenen Rollen von einem gemeinsamen Motor über ein Getriebe angetrieben werden.

6. Mäher nach einem der Ansprüche 1 bis 5,
**dadurch gekennzeichnet, dass** sich die beiden Förderbänder in einer gemeinsamen Ebene befinden und dadurch als eine einzige lange Bandfördereinrichtung wirken.

## Revendications

1. Faucheuse comprenant un groupe de fauchage (8) présentant un certain nombre d'ensembles de coupe, et un dispositif de conditionnement situé derrière la rangée d'ensembles de coupe vis-à-vis d'une direction d'avance au cours du fonctionnement, et comprenant des moyens (16) à bandes convoyeuses, situés derrière le groupe de fauchage (8) et comportant une bande convoyeuse (25) défilant, dans une direction de convoyage, sur deux rouleaux (23, 24) montés dans un châssis de convoyage (20), au moins l'un (23) desdits rouleaux étant entraîné et au moins l'un (24) desdits rouleaux étant monté mobile dans ledit châssis de convoyage (20), en vue d'un réglage de la distance entre lesdits rouleaux, **caractérisée par le fait que** les moyens (16) à bandes convoyeuses comprennent deux bandes convoyeuses (25) en défilement, montées l'une après l'autre dans leur direction de convoyage, de sorte que chacune des deux bandes convoyeuses (25) offre un rouleau proximal (23) et un rouleau distal (24) vis-à-vis de l'autre bande ; **par le fait que** les rouleaux distaux (24) des bandes convoyeuses (25) sont montés mobiles dans les châssis respectifs de convoyage (20), en vue de régler la tension desdites bandes convoyeuses ; **par le fait que** les rouleaux proximaux (23) desdites bandes convoyeuses sont montés à distance mutuelle fixe ; et **par le fait que** les rouleaux des deux bandes convoyeuses sont montés dans un châssis conjoint de convoyage, ou bien les rouleaux respectifs (23, 24) des deux bandes convoyeuses sont montés dans des châssis respectifs de convoyage (20) réciproquement assujettis de façon rigide, les rouleaux proximaux (23) étant situés à distance mutuelle fixe.

2. Faucheuse selon la revendication 1, **caractérisée par le fait que** les rouleaux mobiles (24) peuvent être fixés de manière libérable.

3. Faucheuse selon la revendication 1 ou 2, **caractérisée par le fait que** les rouleaux proximaux (23) des deux bandes convoyeuses sont entraînés.

4. Faucheuse selon la revendication 3, **caractérisée par le fait que** les deux rouleaux entraînés (23) sont menés par des moteurs respectifs (32).

5. Faucheuse selon la revendication 3, **caractérisée par le fait que** les deux rouleaux entraînés sont menés par un moteur conjoint, par l'intermédiaire d'une transmission.

6. Faucheuse selon l'une quelconque des revendications 1 à 5, **caractérisée par le fait que** les deux bandes convoyeuses sont situées dans un plan commun, de façon à agir comme un long convoyeur unique à bandes.
